# EUROPÄISCHE PATENTSCHRIFT

(11) **EP 4 508 363 B1**
(45) Veröffentlichungstag und Bekanntmachung des Hinweises auf die Patenterteilung: **24.12.2025**
(21) Anmeldenummer: 23710984.8
(22) Anmeldetag: 10.03.2023
(51) Int. Cl.: F17C 13/04, F16K 31/06

(54) **ABSPERRVENTIL UND TANKSYSTEM MIT EINEM ABSPERRVENTIL**
SHUT-OFF VALVE AND TANK SYSTEM HAVING A SHUT-OFF VALVE
VANNE D'ARRÊT ET SYSTÈME DE RÉSERVOIR AYANT UNE VANNE D'ARRÊT

(30) Priorität: 13.04.2022 DE 102022203734
(43) Veröffentlichungstag der Anmeldung: 19.02.2025
(73) Patentinhaber: Robert Bosch GmbH, 70442 Stuttgart (DE)
(72) Erfinder: SCHAICH, Udo, 70378 Stuttgart (DE); RAU, Andreas, 70469 Stuttgart (DE)
(86) Internationale Anmeldenummer: PCT/EP2023/056117
(87) Internationale Veröffentlichungsnummer: WO 2023/198374

(56) Entgegenhaltungen:
- DE-A1- 102020 201 162
- US-A- 5 735 582
- US-A1- 2009 236 551
- US-A1- 2022 049 790

## Beschreibung

Die vorgestellte Erfindung betrifft ein Absperrventil und ein Tanksystem mit einem Absperrventil.

### Stand der Technik

Mobile Wasserstofftanksysteme bspw. zum Einsatz in Kraftfahrzeugen, umfassen Tankventile zur Befüllung mit Kraftstoff, wie bspw. Wasserstoff, um Antriebe, wie bspw. Brennstoffzellen oder Wasserstoffverbrennungsmotoren mit Kraftstoff zu versorgen. Für den Fall eines Leitungsbruchs oder Unfalls müssen die Wasserstofftanks mittels eines sogenannten "Shut-Off-Ventils", d.h. einem Absperrventil, selbstständig verschlossen werden, um einen unkontrollierten Austritt von Kraftstoff zu verhindern.

Die DE 10 2020 201162 A1 zeigt eine Tankvorrichtung für einen Brennstoffzellentank, insbesondere zur Speicherung von Wasserstoff, beispielsweise zur Anwendung in Fahrzeugen mit Brennstoffzellenantrieb.

Aus der US 2009/236551 A1 ist eine Ventilvorrichtung bekannt, umfassend einen Temperatursensor, der so angeordnet ist, dass er von einem Gehäuse in einen Tankinnenraum projiziert, um die Temperatur im Tankinnenraum zu erfassen. Dieser Temperatursensor kann die Temperatur erfassen, ohne von der Wärmekapazität des Gehäuses beeinflusst zu werden.

Die US 2022/049790 A1 offenbart eine Ventilvorrichtung für ein gasförmiges Medium, insbesondere Wasserstoff, mit einem Ventilgehäuse und einem darin angeordneten entlang einer Längsachse bewegbaren ersten Magnetanker, welcher erste Magnetanker mit einem ersten Dichtsitz zum Öffnen und Schließen einer Auslassöffnung zusammenwirkt.

In der US 5 735 852 A ist eine Klemme für eine Wirbelsäulenfixations-vorrichtung gezeigt, umfassend: einen Grundkörper, der von einem Kanal zur Aufnahme einer Längsstütze durchzogen ist, wobei der Kanal eine Kanallängsachse aufweist, und ein Verriegelungsmittel zum Drehen und Längsverriegeln der Längsstütze an dem Körper, wobei die Verriegelungs-einrichtung ein Verriegelungsmittel zur Längsachse aufweist

### Offenbarung der Erfindung

Im Rahmen der vorgestellten Erfindung werden ein Absperrventil und ein Tanksystem vorgestellt. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Absperrventil beschrieben sind, selbstverständlich auch im Zusammenhang mit dem erfindungsgemäßen Tanksystem und jeweils umgekehrt, sodass bezüglich der Offenbarung zu den einzelnen Erfindungsaspekten stets wechselseitig Bezug genommen wird bzw. werden kann.

Die vorgestellte Erfindung dient insbesondere dazu, ein kompaktes Absperrventil bereitzustellen, das insbesondere in einem Flaschenhals eines Drucktanks angeordnet werden kann.

Es wird somit gemäß einem ersten Aspekt der vorgestellten Erfindung ein Absperrventil zum Verschließen eines Tanks vorgestellt. Das Absperrventil umfasst einen Steuerraum, ein Vorsteuerventil, ein Hauptventil, einen Elektromagneten, einen Mitnehmer und eine Grundplatte.

Der Elektromagnet umfasst einen Magnetanker und eine Spule, wobei der Magnetanker beweglich angeordnet ist, sodass der Magnetanker sich bei einer Bestromung der Spule um einen Magnetankerhub in Richtung der Grundplatte bewegt.

Das Vorsteuerventil ist beweglich in dem Magnetanker gelagert.

Der Mitnehmer ist dazu konfiguriert, das Vorsteuerventil bei einer Bewegung des Magnetankers aus einer Grundstellung des Vorsteuerventils um einen Vorsteuerventilhub mit in Richtung der Grundplatte in eine Vorsteuerstellung zu bewegen.

Das Hauptventil ist um einen Hauptventilhub in Richtung der Grundplatte bewegbar und dazu konfiguriert, bei einer Bewegung um den Hauptventilhub, das Vorsteuerventil aus der Vorsteuerstellung weiter in Richtung der Grundplatte zu bewegen.

Unter einem Mitnehmer ist im Kontext der vorgestellten Erfindung ein Bauteil zu verstehen, das beweglich ist und dazu konfiguriert ist, bei einer Bewegung einen Bewegungspartner, wie bspw. das erfindungsgemäß vorgesehene Vorsteuerventil zu kontaktieren und bei seiner Bewegung zumindest bereichsweise mitzuführen. Insbesondere ist der erfindungsgemäße Mitnehmer eine Ausstülpung des erfindungsgemäßen Magnetankers, die dazu konfiguriert ist, in eine Ausstülpung des erfindungsgemäß vorgesehenen Vorsteuerventils einzugreifen.

Das vorgestellte Absperrventil basiert auf einem sehr kleinen Vorsteuerventilhub des Vorsteuerventils, der durch eine Bewegung des Magnetankers erzeugt wird und einem größeren Hauptventilhub des Hauptventils, der durch eine Druckdifferenz zwischen dem Steuerraum und eine Hochdruckanbindung des Absperrventils erzeugt wird.

Da der erfindungsgemäß vorgesehene Elektromagnet lediglich für eine Bewegung des Magnetankers um einen kleinen Vorsteuerventilhub benötigt wird, kann der Elektromagnet gegenüber bekannten Absperrventilen, bei denen ein größerer Vorsteuerventilhub vorgesehen ist, kleiner ausgestaltet werden. Entsprechend kann das vorgestellte Absperrventil an sich sehr klein ausgestaltet werden und in einem Flaschenhalt einer Druckflasche eines Tanks angeordnet werden.

Es kann vorgesehen sein, dass der Vorsteuerventilhub kleiner ist als der Hauptventilhub.

Durch einen Vorsteuerventilhub, der kleiner ist als der Hauptventilhub wird eine Kraft, die für den Vorsteuerventilhub benötig wird, minimiert. Entsprechend kann der Elektromagnet besonders schwach und entsprechend klein dimensioniert werden.

Es kann weiterhin vorgesehen sein, dass der Magnetankerhub gleich groß ist wie der Vorsteuerventilhub.

Da eine Bewegung des Magnetankers durch den Mitnehmer auf das Vorsteuerventil übertragen wird, kann der Magnetankerhub direkt in eine Bewegung des Vorsteuerventils und einen entsprechenden Vorsteuerventilhub überführt werden, sodass das Vorsteuerventil und der Magnetanker sich zeitgleich und gleich lange bzw. über die gleiche Länge hinweg in Richtung der Grundplatte bewegen.

Es kann weiterhin vorgesehen sein, dass das Vorsteuerventil in der Ruhestellung eine sich durch das Hauptventil erstreckende Verbindung des Steuerraums zu einer Niederdruckanbindung des Absperrventils abdichtet und in der Vorsteuerstellung die Verbindung freigibt, sodass in der Vorsteuerstellung die Niederdruckanbindung befüllbar ist, um einen Druck in dem Steuerraum abzusenken und das Hauptventil um den Hauptventilhub in Richtung der Grundplatte zu bewegen.

Das Vorsteuerventil ist im Wesentlichen zwischen einer Ruhestellung, in der das Vorsteuerventil eine sich durch das Hauptventil erstreckende Verbindung des Steuerraums zu einer Niederdruckanbindung des Absperrventils abdichtet, einer Vorsteuerstellung und weiter einer ausgelenkten Stellung, in der die Verbindung freigegeben ist, beweglich gelagert. Entsprechend wird über eine Bewegung bzw. den Vorsteuerventilhub des Vorsteuerventils eine Entweichung von Fluid aus dem Steuerraum über die Verbindung eingeleitet und, dadurch bedingt, der Hauptventilhub des Hauptventils ausgelöst. Entsprechend erfolgt der Hauptventilhub des Hauptventils stromlos bzw. ohne Unterstützung durch den Elektromagneten, sondern lediglich Angetrieben durch einen Druckunterschied zwischen einer Hochdruckanbindung bzw. einem Druck in einem mit dem Absperrventil gekoppelten Tank und dem Druck in dem Steuerraum, der je nach Stellung des Vorsteuerventils variiert.

Es kann weiterhin vorgesehen sein, dass das Absperrventil ein Dichtelement umfasst, dass einen Zulauf zu dem Steuerraum aus einem mit dem Absperrventil gekoppelten Hochdrucksystem verhindert, wenn sich das Hauptventil um den Hauptventilhub in Richtung der Grundplatte bewegt hat.

Um einen Druckausgleich zwischen einer Hochdruckanbindung des Absperrventils und dem Steuerraum und eine dadurch bedingte Blockade einer Bewegung des Hauptventils zu verhindern, kann ein Dichtelement, wie bspw. ein Schaum oder ein Dichtring an einer Einlassstelle der Hochdruckanbindung vorgesehen sein, sodass bspw. das Hauptventil das Dichtelement auf die Einlassstelle drückt, wenn sich das Hauptventil um den Hauptventilhub in Richtung der Grundplatte bewegt hat.

Es kann weiterhin vorgesehen sein, dass zwischen dem Magnetanker und der Grundplatte eine Restluftspaltscheibe angeordnet ist.

Eine Restluftspaltscheibe zwischen dem Magnetanker und der Grundplatte verhindert zum einen ein magnetisches Kleben des Magnetankers an der Grundplatte und zum andern ein Befüllen des Steuerraums durch einen Spalt zwischen Magentanker und Grundplatte.

Es kann weiterhin vorgesehen sein, dass das Absperrventil eine Vorsteuerventilfeder umfasst, die das Vorsteuerventil von der Vorsteuerstellung in die Ruhestellung drückt, das Absperrventil eine Positionsfeder umfasst, die das Hauptventil auf eine Niederdruckanbindung des Absperrventils drückt, und das Absperrventil eine Hauptventilfeder umfasst, die das Hauptventil in Richtung des Vorsteuerventils drückt.

Durch jeweilige Federn, d.h. mechanische Federelemente des Absperrventils können Kräfte und Gegenkräfte, insbesondere eine durch den Elektromagnet für den Vorsteuerventilhub bereitzustellende Kraft genau eingestellt werden.

Gemäß einem zweiten Aspekt betrifft die vorgestellte Erfindung ein Tanksystem zum Speichern eines Fluids. Das Tanksystem umfasst einen Tank und eine mögliche Ausgestaltung des vorgestellten Absperrventils.

Es kann vorgesehen sein, dass das vorgestellte Tanksystem zum Speichern von Wasserstoff konfiguriert ist.

Das vorgestellte Absperrventil eignet sich insbesondere zum Verhindern eines Austritts von Wasserstoff aus einem Tank, sodass sich das vorgestellte Tanksystem als besonders sicheres Tanksystem zum Speichern von Wasserstoff eignet.

Es kann weiterhin vorgesehen sein, dass das Absperrventil in einem Flaschenhals eines Druckbehälters des Tanks angeordnet ist.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein.

Es zeigen:
Figur 1 eine schematische Darstellung einer möglichen Ausgestaltung des vorgestellten Absperrventils,
Figur 2 eine schematische Darstellung einer möglichen Ausgestaltung des vorgestellten Tanksystems.

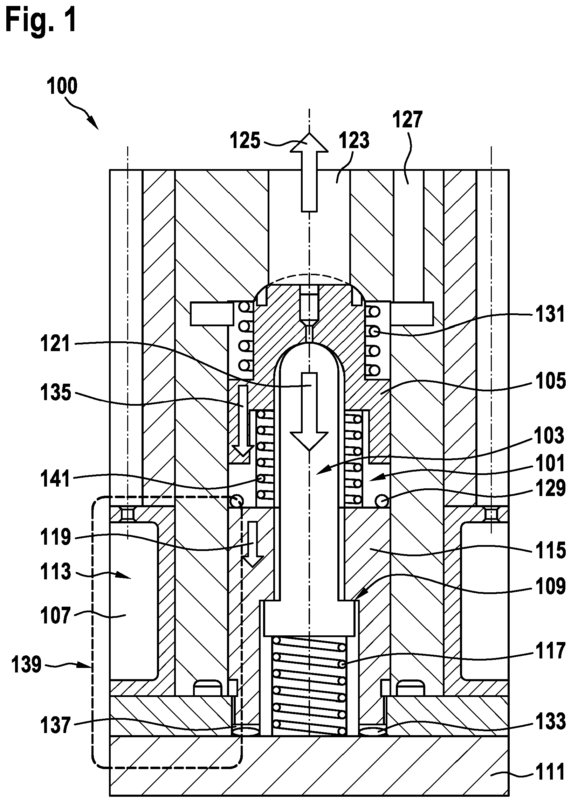

In Figur 1 ist ein Absperrventil 100 dargestellt. Das Absperrventil umfasst einen Steuerraum 101, ein Vorsteuerventil 103, ein Hauptventil 105, einen Elektromagneten 107, einen Mitnehmer 109 und eine Grundplatte 111.

Die Grundplatte 111 kann bspw. ein Teil eines Gehäuses sein, indem das Absperrventil verbaut ist. Daher kann die Grundplatte 111 mit dem Absperrventil 100 über eine Schnittstelle des Absperrventils 100, insbesondere ein Gewinde, verbunden sein, sodass das Gehäuse bzw. die Grundplatte 111 für einen magnetischen Fluss bzw. Rückschluss des Elektromagneten 107 sorgt.

Öffnungskräfte und Haltekräfte des Vorsteuerventils 103 werden durch das Ansteuern bzw. Bestromen einer Spule 113 erreicht. Wird die Spule 113 elektrisch angesteuert, bildet sich ein magnetisches Feld 139 aus, das einen Magnetanker 115 des Elektromagneten 107 entgegen einer Vorsteuerventilfeder 117 um einen Magnetankerhub, wie gemäß Pfeil 119 angedeutet, nach unten in Richtung Grundplatte bewegt.

Durch den mechanischen Mitnehmer 109 wird das Vorsteuerventil 103 analog der Magnetankerbewegung um einen Vorsteuerventilhub, wie durch Pfeil 121 angedeutet, mitgenommen. Dabei hebt das Vorsteuerventil 103 aus seinem Dichtsitz am Hauptventil 105 ab und befüllt eine Niederdruckanbindung 123, wie durch Pfeil 125 angedeutet, mit Fluid aus dem Steuerraum 101.

Im Steuerraum 101 liegt bis zum Lösen des Vorsteuerventils 103 von dem Hauptventil 105 derselbe Druck an, wie in einer Hochdruckanbindung 127 bzw. einem mit der Hochdruckanbindung 127 gekoppelten Tank. Da der Steuerraum über Führungsspalte aus der Hochdruckanbindung 127 befüllt wird.

Durch das Befüllen und dem damit verbundenen Druckaufbau in der Niederdruckanbindung 123 werden die Druckverhältnisse am Hauptventil 105 dahingehend verändert, dass am Hauptventil 105 eine druckbeaufschlagte Fläche im Steuerraum 101 ein kleineres Druckniveau erhält und bis zu einem Dichtelement 129 der Druck angehoben wird. Zusammen mit der druckbeaufschlagten Fläche aus der Hochdruckanbindung 127 ergeben sich die öffnenden Kräfte am Hauptventil 105, die zusätzlich durch eine Hauptventilfeder 131 unterstütz werden, jedoch entgegen der Kraft einer sehr kleinen Positionsfeder 141 wirken.

Das Hauptventil 105 bewegt sich um einen Hauptventilhub, wie durch Pfeil 135 angedeutet, in Richtung des Vorsteuerventils 103, bis es mit diesem in Kontakt kommt.

Bewegt sich das Hauptventil 105 weiter in Richtung Grundplatte 111, wird das Vorsteuerventil 103 aus dem mechanischen Mitnehmer 109 gehoben und folgt weiter einem Weg des Hauptventils 105.

Das Hauptventil 105 bewegt sich konstruktiv so weit bis es am Dichtelement 133 des Magnetankers 115 anstößt und in seinem Hauptventilhub, wie durch Pfeil 135 angedeutet, begrenzt wird.

Das Dichtelement 133 ist so angeordnet, dass bei längerem Ansteuern bzw. geöffnetem Hauptventil 105 ein Nachfüllen des Steuerraums 101 aus der Hochdruckanbindung 127 unterbunden bzw. ausgeschlossen wird.

Zusätzlich befindet sich zwischen Magnetanker 115 und Grundplatte 111 eine bspw. als Dichtelement ausgebildete Restluftspaltscheibe 137, die ein magnetisches Kleben des Magnetankers 115 an der Grundplatte 111 und ein Befüllen des Steuerraums 101 verhindert.

Wird die elektrische Ansteuerung der Spule 113 beendet oder durch ein anderes Ereignis unterbrochen, dann fällt die magnetische Haltekraft ab und der Magnetanker 115 entfernt sich vom Dichtelement 133, sodass Fluid über das Dichtelement 133 bzw. entsprechende Freiflächen in den Steuerraum 101 einströmen und zusammen mit der Vorsteuerventilfeder 117 eine schließende Kraft über das Vorsteuerventil 103 auf das Hauptventil 105 ausgeübt und die Niederdruckanbindung 123 verschlossen wird.

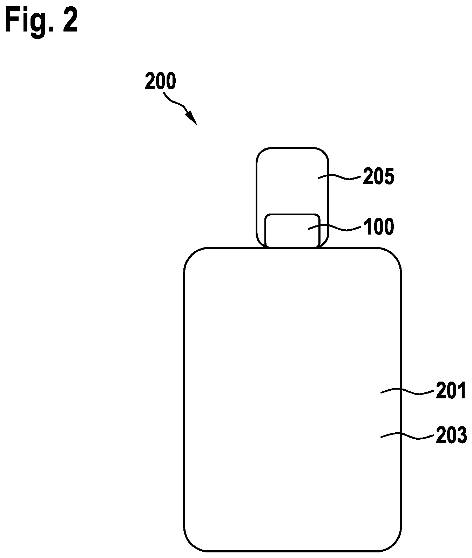

In Figur 2 ist ein Tanksystem 200 dargestellt. Das Tanksystem 200 umfasst einen Tank 201 mit einem Druckbehälter 203 in Form einer Druckflasche mit einem Flaschenhals 205.

In dem Flaschenhals 205 ist das Absperrventil 100 angeordnet.

## Patentansprüche

1. Absperrventil (100) zum Verschließen eines Tanks (201),
wobei das Absperrventil (100) umfasst:
- einen Steuerraum (101),
- ein Vorsteuerventil (103),
- ein Hauptventil (105),
- einen Elektromagneten (107),
- einen Mitnehmer (109),
- eine Grundplatte (111),
wobei der Elektromagnet (107) einen Magnetanker (115) und eine Spule (113) umfasst,
**dadurch gekennzeichnet,**
**dass** das Vorsteuerventil (103) beweglich in dem Magnetanker (115) gelagert ist, wobei der Magnetanker (115) beweglich angeordnet ist, sodass der Magnetanker (115) sich bei einer Bestromung der Spule (113) um einen Magnetankerhub (119) in Richtung der Grundplatte (111) bewegt, wobei der Mitnehmer (109) dazu konfiguriert ist, das Vorsteuerventil (103) bei einer Bewegung des Magnetankers (115) aus einer Grundstellung des Vorsteuerventils (103) um einen Vorsteuerventilhub (121) mit in Richtung der Grundplatte (111) in eine Vorsteuerstellung zu bewegen, wobei das Hauptventil (105) um einen Hauptventilhub (135) in Richtung der Grundplatte (111) bewegbar ist, wobei das Hauptventil (105) dazu konfiguriert ist, bei einer Bewegung um den Hauptventilhub (135), das Vorsteuerventil (103) aus der Vorsteuerstellung weiter in Richtung der Grundplatte (111) zu bewegen.

2. Absperrventil (100) nach Anspruch 1,
**dadurch gekennzeichnet,**
**dass** der Vorsteuerventilhub (121) kleiner ist als der Hauptventilhub (135).

3. Absperrventil (100) nach Anspruch 1 oder 2,
**dadurch gekennzeichnet,**
**dass** der Magnetankerhub (119) gleich groß ist wie der Vorsteuerventilhub (121).

4. Absperrventil (100) nach einem der voranstehenden Ansprüche,
**dadurch gekennzeichnet,**
**dass** das Vorsteuerventil (103) in der Ruhestellung eine sich durch das Hauptventil (105) erstreckende Verbindung des Steuerraums (101) zu einer Niederdruckanbindung (123) des Absperrventils (100) abdichtet und in der Vorsteuerstellung die Verbindung freigibt, sodass in der Vorsteuerstellung die Niederdruckanbindung (123) befüllbar ist, um einen Druck in dem Steuerraum (101) abzusenken und das Hauptventil (105) um den Hauptventilhub (135) in Richtung der Grundplatte (111) zu bewegen.

5. Absperrventil (100) nach einem der voranstehenden Ansprüche,
**dadurch gekennzeichnet,**
**dass** das Absperrventil (100) ein Dichtelement (133) umfasst, dass einen Zulauf zu dem Steuerraum (101) aus einem mit dem Absperrventil (100) gekoppelten Hochdrucksystem verhindert, wenn das Hauptventil (105) sich um den Hauptventilhub (135) in Richtung der Grundplatte (111) bewegt hat.

6. Absperrventil (100) nach einem der voranstehenden Ansprüche,
**dadurch gekennzeichnet,**
**dass** zwischen dem Magnetanker (115) und der Grundplatte (111) eine Restluftspaltscheibe (137) angeordnet ist.

7. Absperrventil (100) nach einem der voranstehenden Ansprüche,
**dadurch gekennzeichnet,**
**dass** das Absperrventil (100) eine Vorsteuerventilfeder (139) umfasst, die das Vorsteuerventil (103) in die Ruhestellung drückt,
das Absperrventil (100) eine Positionsfeder (141) umfasst, die das Hauptventil (105) auf eine Niederdruckanbindung (123) des Absperrventils (100) drückt, und
das Absperrventil (100) eine Hauptventilfeder (131) umfasst, die das Hauptventil (105) in Richtung des Vorsteuerventils (103) drückt.

8. Tanksystem (200) zum Speichern eines Fluids,
wobei das Tanksystem (200) umfasst:
- einen Tank (201),
- ein Absperrventil (100) nach einem der Ansprüche 1 bis 7.

9. Tanksystem (200) nach Anspruch 8,
wobei das Tanksystem (200) zum Speichern von Wasserstoff konfiguriert ist.

10. Tanksystem (200) nach Anspruch 8 oder 9,
**dadurch gekennzeichnet,**
**dass** das Absperrventil (100) in einem Flaschenhals (205) eines Druckbehälters (203) des Tanks (201) angeordnet ist.

## Claims

1. Shut-off valve (100) for closing off a tank (201),
wherein the shut-off valve (100) comprises:
- a control chamber (101),
- a pilot-control valve (103),
- a main valve (105),
- an electromagnet (107),
- a driver (109),
- a base plate (111),
wherein the electromagnet (107) comprises a magnet armature (115) and a coil (113),
**characterized**
**in that** the pilot-control valve (103) is mounted in a movable manner in the magnet armature (115), wherein the magnet armature (115) is arranged in a movable manner such that, when the coil (113) is energized, the magnet armature (115) is moved through a magnet-armature stroke (119) in the direction of the base plate (111), wherein the driver (109) is configured to move the pilot-control valve (103) along, from a home position of the pilot-control valve (103) through a pilot-control-valve stroke (121), in the direction of the base plate (111) into a pilot-control position during a movement of the magnet armature (115), wherein the main valve (105) is movable through a main-valve stroke (135) in the direction of the base plate (111), wherein the main valve (105) is configured to move the pilot-control valve (103) from the pilot-control position further in the direction of the base plate (111) during a movement through the main-valve stroke (135).

2. Shut-off valve (100) according to Claim 1,
**characterized**
**in that** the pilot-control-valve stroke (121) is shorter than the main-valve stroke (135).

3. Shut-off valve (100) according to Claim 1 or 2,
**characterized**
**in that** the magnet-armature stroke (119) is of the same magnitude as the pilot-control-valve stroke (121).

4. Shut-off valve (100) according to one of the preceding claims,
**characterized**
**in that** the pilot-control valve (103), in the rest position, seals off a connection, extending through the main valve (105), of the control chamber (101) to a low-pressure connection (123) of the shut-off valve (100) and, in the pilot-control position, opens up the connection, so that, in the pilot-control position, the low-pressure connection (123) is able to be filled, so as to lower a pressure in the control chamber (101) and to move the main valve (105) through the main-valve stroke (135) in the direction of the base plate (111).

5. Shut-off valve (100) according to one of the preceding claims,
**characterized**
**in that** the shut-off valve (100) comprises a sealing element (133) which, when the main valve (105) has moved through the main-valve stroke (135) in the direction of the base plate (111), prevents an inflow to the control chamber (101) from a high-pressure system coupled to the shut-off valve (100).

6. Shut-off valve (100) according to one of the preceding claims,
**characterized**
**in that** a residual-air-gap disc (137) is arranged between the magnet armature (115) and the base plate (111).

7. Shut-off valve (100) according to one of the preceding claims,
**characterized**
**in that** the shut-off valve (100) comprises a pilot-control-valve spring (139) which pushes the pilot-control valve (103) into the rest position,
the shut-off valve (100) comprises a position spring (141) which pushes the main valve (105) to a low-pressure connection (123) of the shut-off valve (100), and
the shut-off valve (100) comprises a main-valve spring (131) which pushes the main valve (105) in the direction of the pilot-control valve (103).

8. Tank system (200) for storing a fluid,
wherein the tank system (200) comprises:
- a tank (201),
- a shut-off valve (100) according to one of Claims 1 to 7.

9. Tank system (200) according to Claim 8,
wherein the tank system (200) is configured to store hydrogen.

10. Tank system (200) according to Claim 8 or 9,
**characterized**
**in that** the shut-off valve (100) is arranged in a bottle neck (205) of a pressure vessel (203) of the tank (201).

## Revendications

1. Vanne d'arrêt (100) destinée à fermer un réservoir (201),
la vanne d'arrêt (100) comprenant :
- une chambre de commande (101),
- une vanne de commande pilote (103),
- une vanne principale (105),
- un électroaimant (107),
- un entraîneur (109),
- une plaque de base (111),
l'électroaimant (107) comprenant une armature magnétique (115) et une bobine (113),
**caractérisée en ce**
**que** la vanne de commande pilote (103) est montée de manière mobile dans l'armature magnétique (115), l'armature magnétique (115) étant disposée de manière mobile si bien que l'armature magnétique (115) se déplace en direction de la plaque de base (111) d'une course (119) d'armature magnétique lorsque la bobine (113) est alimentée électriquement, l'entraîneur (109) étant configuré pour déplacer la vanne de commande pilote (103) hors d'une position de base de la vanne de commande pilote (103) d'une course (121) de vanne de commande pilote en direction de la plaque de base (111) dans une position de commande pilote lorsque l'armature magnétique (115) est déplacée, la vanne principale (105) pouvant être déplacée en direction de la plaque de basse (111) d'une course (135) de vanne principale, la vanne principale (105) étant configurée pour continuer à déplacer lors d'un déplacement de la course (135) de vanne principale la vanne de commande pilote (103) depuis la position de commande pilote en direction de la plaque de base (111).

2. Vanne d'arrêt (100) selon la revendication 1,
**caractérisée en ce**
**que** la course (121) de vanne de commande pilote est inférieure à la course (135) de vanne principale.

3. Vanne d'arrêt (100) selon la revendication 1 ou 2,
**caractérisée en ce**
**que** la course (119) d'armature magnétique est égale à la course (121) de vanne de commande pilote.

4. Vanne d'arrêt (100) selon l'une des revendications précédentes,
**caractérisée en ce**
**que** la vanne de commande pilote (103) étanchéifie dans la position de repos une liaison de la chambre de commande (101), s'étendant à travers la vanne principale (105), à un système d'attache basse pression (123) de la vanne d'arrêt (100) et libère dans la position de commande pilote la liaison si bien que dans la position de commande pilote, le système d'attache basse pression (123) peut être rempli pour abaisser une pression dans la chambre de commande (101) et pour déplacer la vanne principale (105) de la course (135) de vanne principale en direction de la plaque de base (111).

5. Vanne d'arrêt (100) selon l'une des revendications précédentes,
**caractérisée en ce**
**que** la vanne d'arrêt (100) comprend un élément d'étanchéité (133), qui empêche une arrivée vers la chambre de commande (101) depuis un système haute pression couplée à la vanne d'arrêt (100) lorsque la vanne principale (105) s'est déplacée de la course (135) de vanne principale en direction de la plaque de base (111).

6. Vanne d'arrêt (100) selon l'une des revendications précédentes,
**caractérisée en ce**
**qu'**un disque d'entrefer d'air résiduel (137) est disposé entre l'armature magnétique (115) et la plaque de base (111).

7. Vanne d'arrêt (100) selon l'une des revendications précédentes,
**caractérisée en ce**
**que** la vanne d'arrêt (100) comprend un ressort (139) de vanne de commande pilote, qui pousse la vanne de commande pilote (103) dans la position de repos,
la vanne d'arrêt (100) comprend un ressort de position (141), qui pousse la vanne principale (105) sur un système d'attache basse pression (123) de la vanne d'arrêt (100), et
la vanne d'arrêt (100) comprend un ressort (131) de vanne principale, qui pousse la vanne principale (105) en direction de la vanne de commande pilote (103).

8. Système de réservoir (200) destiné à stocker un fluide,
le système de réservoir (200) comprenant :
- un réservoir (201),
- une vanne d'arrêt (100) selon l'une des revendications 1 à 7.

9. Système de réservoir (200) selon la revendication 8,
le système de réservoir (200) étant configuré pour stocker de l'hydrogène.

10. Système de réservoir (200) selon la revendication 8 ou 9,
**caractérisé en ce**
**que** la vanne d'arrêt (100) est disposée dans un goulot de bouteille (205) d'un récipient sous pression (203) du réservoir (201).
